# EUROPÄISCHE PATENTSCHRIFT

(11) **EP 0 789 200 B1**
(45) Veröffentlichungstag und Bekanntmachung des Hinweises auf die Patenterteilung: **26.09.2001**
(21) Anmeldenummer: 96101859.5
(22) Anmeldetag: 09.02.1996
(51) Int. Cl.: F24F 11/00

(54) **Verfahren zur sensorgesteuerten Bedarfslüftung und Regler zur Durchführung des Verfahrens**
Process for sensor control of ventilation demand and controller for the realisation of the process
Procédé de réglage par capteur de la demande de ventilation et régulateur pour la mise en oeuvre du procédé

(43) Veröffentlichungstag der Anmeldung: 13.08.1997
(73) Patentinhaber: Siemens Building Technologies AG, 6300 Zug (CH)
(72) Erfinder: Meier, Simon, Dr., CH-8707 Meilen (CH); Breitenmoser, Willi, CH-8707 Uetikon am See (CH)

(56) Entgegenhaltungen:
- WO-A-89/12269
- DE-A- 4 215 459
- US-A- 4 164 172
- US-A- 4 499 377

## Beschreibung

Die Erfindung betrifft ein Verfahren zur sensorgesteuerten Bedarfslüftung eines Raumes, bei welchem die Luftqualität durch einen Sensor überwacht, das Sensorsignal mit einem Sollwert verglichen und bei Änderung des Lufterneuerungsbedarfs ein Schaltsignal ausgelöst und die zugeführte Aussenluftmenge entsprechend angepasst wird.

Aus WO-A-89/12269 ist ein Verfahren dieser Art bekannt, bei dem ein Sollwert der Luftqualität unter anderem abhängig von der Luftfeuchte verändert wird.

Bei einem in der DE-A-42 15 459 beschriebenen Verfahren dieser Art wird das Schaltsignal dann ausgelöst, wenn das aktuelle Sensorsignal einen Schwellwert oder das von der Auswerteelektronik ermittelte Sensor-Durchschnittssignal einer frei bestimmbaren Zeit um einen festgelegten Betrag überschreitet. Dadurch soll erreicht werden, dass sich die Schaltfunktion in Abhängigkeit von der jeweiligen Situation verändert. Es mag sein, dass dieses Verfahren dem subjektiven Empfinden näher liegt als die bekannten Verfahren, bei denen die Auslösung des Schaltsignals anhand eines blossen Vergleichs des Sensorsignals mit einem Schwellwert erfolgt. Dennoch ist aber das Verfahren weit davon entfernt, sich auf wechselnde Umweltbedingungen einstellen zu können oder eine Energie-optimierung zu ermöglichen.

Da Lüftungs- und Klimaanlagen bekanntlich einen nicht geringen Energieverbrauch aufweisen, besteht die mit der Erfindung zu lösende Aufgabe in erster Linie in einer Optimierung des Energieverbrauchs, um dadurch Kosten sparen zu können.

Diese Aufgabe wird erfindungsgemäss dadurch gelöst, dass in Abständen eine Referenzlüftung vorgenommen und dabei ein effektiver Sollwert der Luftqualität ermittelt, und dass aus diesem in einem adaptiven Verfahren ein adaptiver Sollwert bestimmt und als Sollwert für die Regelung verwendet wird.

Die Bestimmung des adaptiven Sollwerts erfolgt vorzugsweise schrittweise, indem der aktuelle effektive Sollwert mit dem unmittelbar vorhergehenden adaptiven Sollwert verglichen und bei einer Abweichung zwischen diesen beiden Sollwerten eine Adaption des aktuellen effektiven Sollwerts mit einer wählbaren Schrittgrösse vorgenommen wird.

Die Erfindung betrifft weiter einen Regler zur Durchführung des genannten Verfahrens, mit einem Sensor, einer Sensorelektronik und einer Regelelektronik. Der erfindungsgemässe Regler ist dadurch gekennzeichnet, dass die Regelelektronik einen Mikrocontroller enthält, welcher eine Steuerung für die Bedarfslüftung und für die Referenzlüftungen aufweist.

Das erfindungsgemässe Verfahren und der erfindungsgemässe Regler zur dessen Durchführung ermöglichen durch die periodisch vorgenommene Referenzlüftung eine weitgehende Anpassung an wechselnde Umweltbedingungen. Wenn beispielsweise die Referenzlüftung so wie bei einem bevorzugten Ausführungsbeispiel täglich vorgenommen wird, dann ist dadurch der Regler sowohl an jahreszeitliche als auch an vom jeweiligen Wochentag abhängige Schwankungen der Umweltbedingungen optimal angepasst.

Ausserdem wird durch die Referenzlüftungen der Einfluss eventueller Unstabilitäten des Sensors, wie z.B. Drift, auf die Qualität und Zuverlässigkeit der Regelung ausgeschaltet. Die Verwendung des adaptiven Sollwerts als Vergleichsbasis für das Sensorsignal bedeutet, dass Abweichungen nicht sofort und nicht vollständig sondern in kleinen Schritten korrigiert werden. Das hat den Vorteil, dass extreme Änderungen nicht voll berücksichtigt werden und der Regler daher nicht unstabil wird.

Die tägliche Referenzlüftung erfolgt bei einer bevorzugten Ausführungsform zur Tageszeit mit der zur Erreichung des Regelziels relevanten Aussenluftqualität. Daraus ergibt sich ein optimales Verhältnis zwischen Sollwert der Luftqualität einerseits und Lüftungshäufigkeit andererseits.

Im folgenden wird die Erfindung anhand eines in den Zeichnungen dargestellten Ausführungsbeispiels näher erläutert; es zeigt:
Fig. 1 ein Blockschaltbild eines erfindungsgemässen Reglers,
Fig. 2 ein Blockschaltbild eines Details des Reglers von Fig. 1,
Fig. 3 ein Flussdiagramm der Bedarfslüftung; und
Fig. 4 ein Flussdiagramm des Aufstartvorgangs des Reglers.

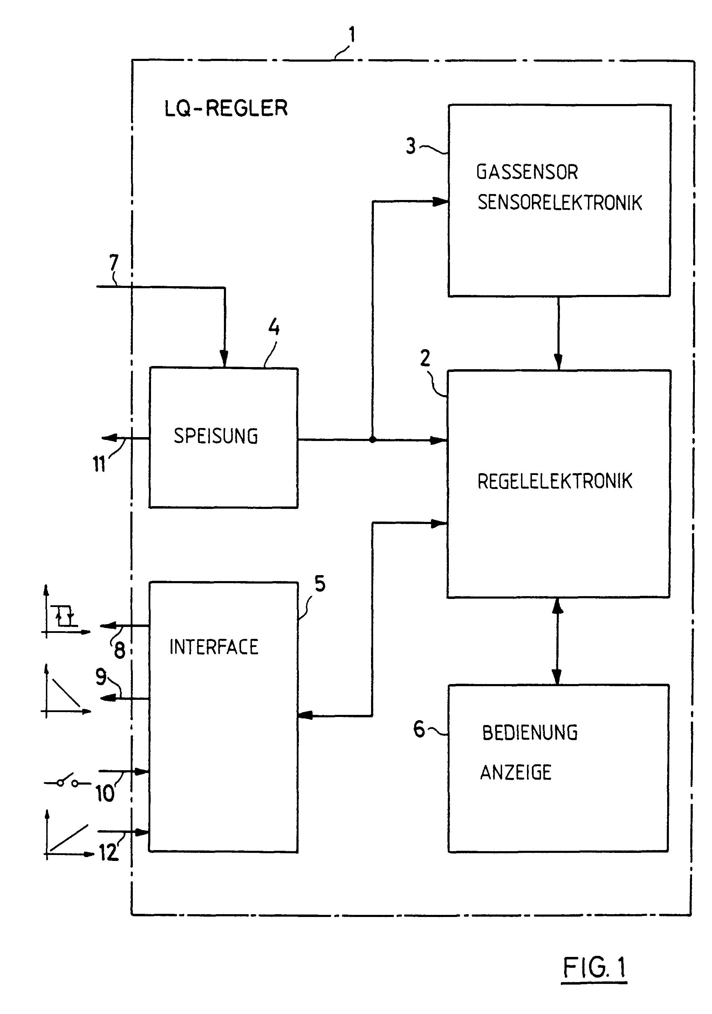

Der in Fig. 1 dargestellte LQ-Regler 1 (LQ = Luftqualität) dient zur Steuerung einer Bedarfslüftung, das ist eine Lüftungs- oder Klimaanlage, bei der die zugeführte Luftmenge dauernd dem tatsächlichen Lufterneuerungsbedarf angepasst wird. Der Lufterneuerungsbedarf wird durch eine Messung der Luftqualität im Raum mittels eines geeigneten Sensors und durch Vergleich des gemessenen Istwerts mit einem Sollwert ermittelt. Ein geeigneter Sensor ist beispielsweise ein Mischgasfühler, der das Vorhandensein von verbrennbaren Gasen und Dämpfen, wie beispielsweise Körpergerüchen, Tabakrauch, und Emissionen von Materialien, im Raum misst und in Restaurants, Konferenzräumen sowie Fest- und Sporthallen optimal einsetzbar ist. Andere geeignete Sensoren sind CO₂-Fühler, welche die einen Indikator für die Anwesenheit von Personen darstellende CO₂-Konzentration messen. Sie werden optimal in grossen Räumen eingesetzt, in denen nicht geraucht wird, beispielsweise in Hörsälen, Theater- und Konferenzräumen.

Der LQ-Regler 1 enthält darstellungsgemäss im wesentlichen eine Regelelektronik 2, eine Stufe 3 mit einem eingebauten Gassensor und dessen Sensorelektronik, eine Speisung 4, ein Interface 5 und eine Benutzeroberfläche 6 mit Bedienungstasten und einer Anzeige. Die Speisung 4, die über einen Eingang 7 an das Netz angeschlossen ist, versorgt die Stufe Gassensor/ Sensorelektronik 3 und die Regelelektronik 2 mit Strom. Das Interface 5 ist mit der Regelelektronik 2 verbunden und weist Ausgänge 8 und 9 für Bedarfssignale zum Ein-/Ausschalten des angeschlossenen Ventilators bzw. zur Steuerung von dessen Drehzahl in Abhängigkeit von der vom Sensor gemessenen Luftqualität und einen Sperreingang 10 auf.

Der LQ-Regler 1 mit den bisher genannten Elementen 2 bis 10 stellt die Normalausführung dar, bei der Gassensor, Elektronik, Steuerung sowie Bedienung und Anzeigen in einem gemeinamen Gehäuse angeordnet sind, das in dem zu belüftenden Raum an geeigneter Stelle angeordnet ist. Da der Gassensor in erster Linie dort zu plazieren ist, wo man gute Luft haben will, wogegen die Benutzeroberfläche an einer Stelle angeordnet sein soll, wo sie durch berechtigte Personen einfach und durch Unberechtigte nur sehr schwer bedienbar ist, kann es vorkommen, dass der Sensor ausserhalb des Reglers 1 und getrennt von diesem plaziert werden muss. Für diesen Fall weist der LQ-Regler 1 einen Ausgang 11 für die Speisung dieses externen Sensors und einen Eingang 12 für dessen Luftqualitätssignal auf.

Der Sensor ist in beiden Fällen, eingebaut und extern, ein Mischgasfühler, der im wesentlichen aus einem hochporösen, gesinterten Halbleiterrohr aus dotiertem Zinndioxid mit einer innenliegenden Heizung besteht. Das Zinndioxid ist ein Katalysator und arbeitet reversibel nach dem Redox-Prinzip. Die Messung ist breitbandig, d.h. dass aus den Fühlersignalen weder auf die Art der Gase noch auf deren Konzentration geschlossen werden kann. Trotzdem zeigt die Erfahrung, dass die Mischgasfühler den wesentlichen Teil der vom Menschen empfundenen Luftqualität erfassen. Das Signal des Sensors weist eine gewisse Querempfindlichkeit gegenüber Temperatur und Feuchte auf und muss daher kompensiert werden. Im Fall des eingebauten Sensors erfolgt die Kompensation in der Sensorelektronik in der Stufe 3, im Fall des externen Sensors, der mit einer Sensorelektronik ausgerüstet ist, erfolgt die Kompensation extern im Sensor.

Die Benutzeroberfläche 6 enthält beispielsweise Tasten für die Eingabe von Parametern und/oder für Handbetrieb und Anzeigen für den Betriebszustand und die Betriebsart. Die Regelelektronik 2 enthält den Sollwert für die Luftqualität und führt den Vergleich zwischen Ist- und Sollwert durch. Bei Unterschreitung des Sollwerts wird die Ventilation eingeschaltet (Ausgang 8) und es wird die Drehzahl der Ventilation auf eine der gemessenen Luftqualität entsprechenden Wert geregelt (Ausgang 9). Letzteres kann entweder kontinuierlich erfolgen (bei drehzahlregulierten Ventilatoren) oder abgestuft (bei geschalteten Ventilatoren mit mehreren Stufen).

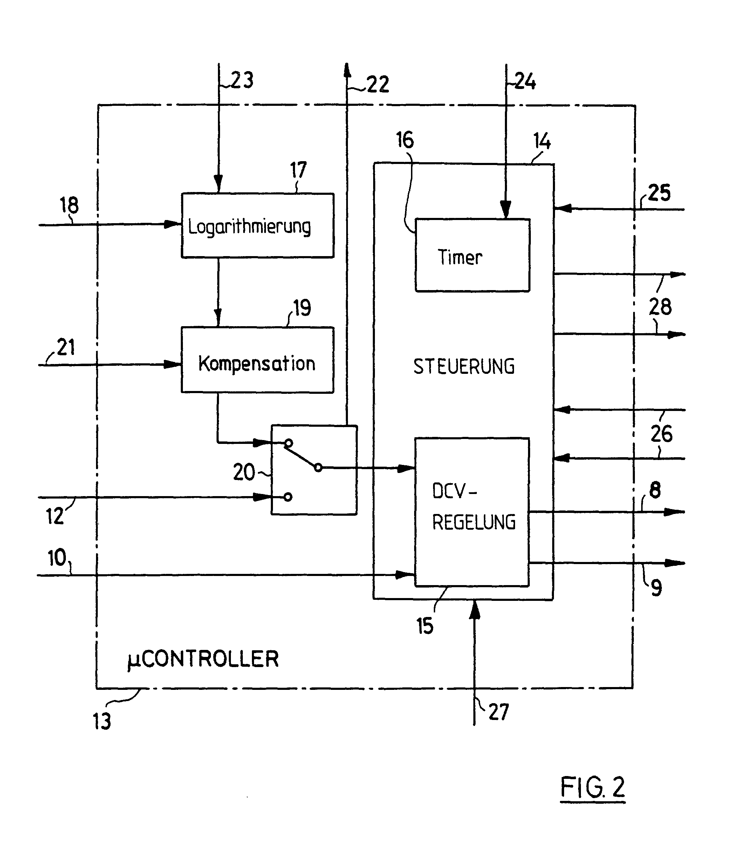

Das Herzstück des LQ-Reglers 1 ist ein Mikroprozessor oder Mikrocontroller 13, dessen Blockschaltbild in Fig. 2 dargestellt ist und der im wesentlichen der Regelelektronik von Fig. 1 entspricht. Darstellungsgemäss enthält der Mikrocontroller 13 eine zentrale Steuerung 14 mit einer sogenannten DCV-Regelung 15 (DCV steht für Bedarfslüftung) und mit einem Timer 16, eine Logarithmierstufe 17, an welche über einen Eingang 18 das Signal des eingebauten Sensors geführt ist, eine Kompensationsstufe 19 zur Kompensation des Signals des Logarithmierstufe 17, und eine Signalweiche 20. Ausserdem enthält der Mikrocontroller 13 einen an die Kompensationsstufe 19 geführten Eingang 21 für ein Kompensationssignal, einen Statusausgang 22, der anzeigt, dass ein externer Sensor angeschlossen ist, einen optionalen Eingang 23 für ein Signal zum Abgleich des eingebauten Sensors, einen Eingang 24 für ein Synchronisationssignal für den Timer 16, einen Eingang 25 zur Eingabe einstellbarer Parameter, zwei Eingabetasten 26 und einen Eingang 27 zur Einstellung des Einschaltpunktes und der Steilheit der Bedarfssignale. Der Einschaltpunkt ist im wesentlichen der Sollwert und die Steilheit ist die Neigung der Geraden, die angibt, wieviel Luftqualität einer bestimmten Spannung entspricht. Ausserdem sind noch die schon die in Fig. 1 gezeigten Ausgänge 8 und 9 für die Bedarfssignale, der Sperreingang 10, der Eingang 12 des Signals des externen Sensors und zwei Anzeigen 28 eingezeichnet. Der Sperreingang 10 dient dazu, den LQ-Regler 1 mit einem externen Signal blockieren zu können.

Die Logarithmierstufe 17 und die Kompensationsstufe 19 sind Teil der Sensorelektronik des eingebauten Sensors und gehören somit zur Stufe 3 Gassensor/Sensorelektronik von Fig. 1. Die Logarithmierstufe 17 logarithmiert die Signale des eingebauten Sensors und das Abgleichsignal für diesen und führt das logarithmierte Signal an die Kompenationsstufe 19. Das von der Stufe 19 gelieferte kompensierte Signal des Sensors ist an den einen Eingang der Signalweiche 20 geführt, deren anderer Eingang mit dem Reglereingang 12 (Signal des externen Sensors) und deren Ausgang mit der DCV-Regelung 15 verbunden ist. Wenn kein externer Sensor an den LQ-Regler 1 angeschlossen ist, dann befindet sich die Signalweiche 20 in der eingezeichneten Stellung und führt der DCV-Regelung 15 die Signale des eingebauten Sensors zu. Ist hingegen ein externer Sensor angeschlossen, dann befindet sich der Schalter der Weiche 20 in der nicht eingezeichneten Stellung und verbindet die DCV-Regelung 15 mit der Leitung 12 zum externen Sensor. Ausserdem liegt in diesem Fall am Statusausgang 22 ein Signal "extemer Sensor ist angeschlossen", welches den eingebauten Sensor deaktiviert.

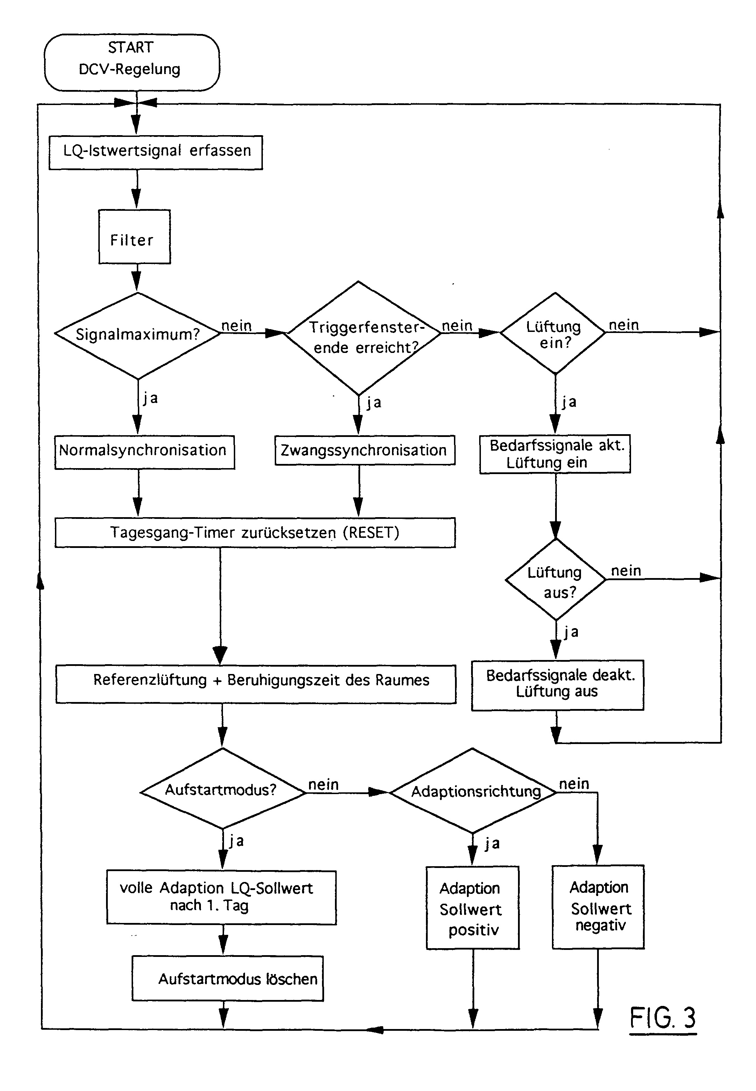

Die DCV-Regelung 15, deren Flussdiagramm in Fig. 3 dargestellt ist, erfasst im wesentlichen den Istwert der Luftqualität und vergleicht diesen mit dem Sollwert, aktiviert und deaktiviert anhand dieses Vergleichs die Bedarfssignale und schaltet entsprechend die Lüftung ein bzw. aus und sie kompensiert ausserdem den Einfluss der wechselnden Aussenluftqualität durch periodische Referenzlüftungen und Anpassungen des Sollwerts.

Diese Kompensation des Einflusses der wechselnden Aussenluftqualität ist deswegen erforderlich, weil die Luftqualität in Räumen nicht nur durch die Art und Stärke der Geruchsquellen im Raum selbst und durch die zugeführte Aussenluftmenge, sondern auch durch die Qualität der Aussenluft bestimmt ist, die aber ihrerseits nicht konstant, sondern durch äussere Einflussfaktoren wie z.B. Jahreszeit, Wochentag, Verkehr, Heizungseinstellung und dergleichen, beeinflusst ist. Wenn nun Regelparameter, wie beispielsweise die Schaltpunkte des Ventilators, fix eingestellt sind, wird die Lüftungsanlage mit ab-nehmender Aussenluftqualität immer früher und damit länger in Betrieb genommen. Wenn man andererseits die Regelparameter auf den ungünstigsten Fall einstellt, dann ist der Kundennutzen stark reduziert.

Zur Kompensation des Einflusses der Aussenluft wird in der Regel täglich am Morgen eine Luftspülung oder Referenzlüftung vorgenommen und dabei die Luftqualität mit dem Gassensor gemessen und der gemessene Wert als Sollwert für die nächsten 24 Stunden verwendet. Wenn diese Referenzlüftung vor dem Einsetzen des Morgenverkehrs erfolgt, kann man davon ausgehen, dass der Sollwert der besten an diesem Tag erreichbaren Luftqualität entspricht. Um zu vermeiden, dass extreme Änderungen voll berücksichtigt werden und der Regler dadurch unstabil wird, leitet man aus dem aktuellen Sollwert einen adaptiven Sollwert ab und verwendet diesen als Vergleichsbasis für die Regelung. Zu diesem Zweck vergleicht man den aktuellen Sollwert mit demjenigen des Vortages. Ist der aktuelle Wert höher als der des Vortages, werden die Regelparameter um ein Inkrement in Richtung höhere Werte verschoben und umgekehrt.

Der Zeitpunkt der Referenzlüftung wird durch den Timer 16 gesteuert, wobei dessen Synchronisation mit dem Tagesgang entweder via Leitung 24 über eine externe Schaltuhr oder eine "interne" Uhr erfolgen kann. Interne Uhr bedeutet, dass die Synchronisation zwischen Timer und Tagesgang ohne Verwendung eines externen Synchronisationssignals intern im Mikrocontroller 13 durchgeführt wird. Das hat den Vorteil, dass keine externe Uhr und keine Batterie für deren Antrieb erforderlich ist. Die Synchronisationsmethode mit der internen Uhr beruht darauf, dass das Signal des Gassensors, wenn man es über längere Zeit, beispielsweise über mehrere Tage, betrachtet, einen charakteristischen, periodischen Verlauf aufweist, in welchem insbesondere die Zeiten der geringsten Luftbelastung, das sind beispielsweise die frühen Morgenstunden, deutlich erkennbar sind.

Man kann diese Zeiten dadurch herausfinden, dass man das Signal des Gassensors filtert und das Ausgangssignal des Filters auf Signalmaxima untersucht. Da diese Maxima Zeiten geringster Luftbelastung oder bester Luftqualität entsprechen, können sie zur Synchronisation des Timers 16 verwendet werden. Sobald der Timer 16 ein solches Synchronisationssignal erhält, zählt er von Null bis 25,5 Stunden und der Mikrocontroller 13 sucht zwischen 22,5 und 25,5 Stunden den Maximalwert der Luftqualität. Findet er diesen in dem angegebenen Zeitfenster, dann wird eine Referenzlüftung gestartet und der Timer beginnt erneut zu zählen.

Die DCV-Regelung ist im Flussdiagramm von Fig. 3 dargestellt. Der Gassensor (im LQ-Regler eingebaut oder extern) misst kontinuierlich die Luftqualität. Das LQ-Istwertsignal wird gefiltert und das gefilterte Signal wird daraufhin untersucht, ob es innerhalb eines Triggerfensters von beispielsweise 22,5 bis 25,5 Stunden ein Signalmaximum aufweist. Wird ein Maximum gefunden, dann wird der Tagesgang sofort synchronisiert, d.h. der Timer 16 (Fig. 2) wird auf Null gestellt und beginnt zu zählen. Wird kein Maximum gefunden, dann erfolgt am Ende des Triggerfensters (bei 25,5 h) eine Zwangssynchronisation des Tagesgangs, d.h. der Timer wird auf Null gestellt und beginnt erneut zu zählen. Nach einer bestimmten Beruhigungszeit des Raumes nach der Referenzlüftung wird der Istwert der Luftqualität gemessen, der der effektive Sollwert für den nächsten Zyklus von etwa 24 Stunden ist.

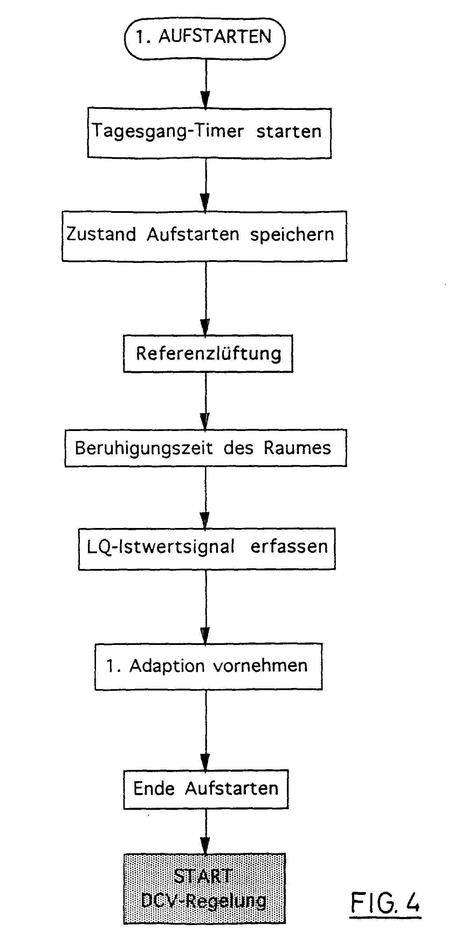

Nach der Erfassung des Istwerts der Luftqualität erfolgt nun die Bestimmung des adaptiven Sollwerts. Dazu wird in einem ersten Schritt überprüft, ob sich die Regelung im sogenannten Aufstartmodus (siehe auch Fig. 4) befindet, was in der Regel nur unmittelbar nach der ersten oder nach einer erneuten Inbetriebnahme der Fall ist. Lautet die Antwort "ja", dann erfolgt eine volle Adaption des effektiven Sollwerts, d.h. der effektive Sollwert wird als adaptiver Sollwert übernommen. Anschliessend wird der Aufstartmodus gelöscht und die Regelung beginnt wieder von neuem unmittelbar nach "START".

Wenn sich die Regelung nicht im Aufstartmodus befindet, dann wird der effektive Sollwert mit dem adaptiven Sollwert des Vortags verglichen und es wird aufgrund dieses Vergleichs die Adaptionsrichtung festgelegt. Ist der effektive Sollwert grösser als der adaptive Sollwert des Vortags (Fall "ja" in Fig. 3), dann erfolgt eine Adaption in positiver, ist er kleiner (Fall "nein" in Fig. 3), in negativer Richtung. Nach der Adaption beginnt die Regelung von neuem unmittelbar nach "START".

Der bisher beschriebene Ablauf der DCV-Regelung nach der Filterung gilt für den seltenen Fall der Referenzlüftung, die ja nur einmal por Tag erfolgt. Im Normalbetrieb wird das gefilterte Signal weder ein Maximum aufweisen noch das Triggerfensterende erreicht haben, so dass die Regelung die in Fig. 3 rechts eingezeichnete Schlaufe durchlaufen wird. Dabei wird anhand eines Vergleichs des Istwerts der Luftqualität mit dem adaptiven Sollwert entschieden, ob die Lüftung eingeschaltet werden soll. Bei "nein" beginnt der Regelkreis von neuem unmittelbar nach "START".

Bei der Antwort "ja" auf "Lüftung einschalten?" werden die Bedarfssignale aktiviert und die Lüftung wird eingeschaltet. Während der Lüftung wird überprüft, wann die Luftqualität den adaptiven Sollwert wieder überschreitet. Ist dies der Fall, werden die Bedarfssignale deaktiviert und die Lüftung wird ausgeschaltet. Dann beginnt die Regelung von neuem unmittelbar nach "START".

Das Flussdiagramm von Fig. 4 zeigt das schon bei der Beschreibung von Fig. 3 erwähnte 1. Aufstarten des Mikrocontrollers 13 (Fig. 2) nach der Installation oder nach einer Betriebsunterbrechung des LQ-Reglers 1 (Fig 1). Mit dem Aufstarten wird der Tagesgang-Timer 16 (Fig. 2) gestartet und der Aufstartmodus gespeichert. Dann erfolgt eine Referenzlüftung und nach einer gewissen Beruhigungszeit des Raumes wird die Luftqualität gemessen. Bei der folgenden 1. Adaption wird der Istwert der Luftqualität als adaptiver Sollwert übernommen und gespeichert. Damit ist das Aufstarten beendet und es beginnt die DCV-Regelung von Fig. 3.

## Patentansprüche

1. Verfahren zur sensorgesteuerten Bedarfslüftung eines Raumes, bei welchem die Luftqualität durch einen Sensor überwacht, das Sensorsignal mit einem Sollwert verglichen und bei Änderung des Lufterneuerungsbedarfs ein Schaltsignal ausgelöst und die zugeführte Aussenluftmenge entsprechend angepasst wird, **dadurch gekennzeichnet, dass** in Abständen eine Referenzlüftung vorgenommen und dabei ein effektiver Sollwert der Luftqualität ermittelt und dass aus diesem in einem adaptiven Verfahren ein adaptiver Sollwert bestimmt und als Sollwert für die Regelung verwendet wird.

2. Verfahren nach Anspruch 1, **dadurch gekennzeichnet, dass** die Bestimmung des adaptiven Sollwerts schrittweise erfolgt, indem der aktuelle effektive Sollwert mit dem unmittelbar vorhergehenden adaptiven Sollwert verglichen und bei einer Abweichung zwischen diesen beiden Sollwerten eine Adaption des aktuellen effektiven Sollwerts mit einer wählbaren Schrittgrösse vorgenommen wird.

3. Verfahren nach Anspruch 2, **dadurch gekennzeichnet, dass** die Referenzlüftung in der Regel täglich vorgenommen wird und vorzugsweise zur Tageszeit mit der zur Erreichung des Regelziels relevanten Aussenluftqualität erfolgt.

4. Verfahren nach Anspruch 3, **dadurch gekennzeichnet, dass** zum Zweck der Auslösung der Referenzlüftung das Istwertsignal der Luftqualität auf periodisch wiederkehrende Werte maximaler Luftqualität untersucht wird, und dass beim Auftreten eines solchen Maximalwerts eine Referenzlüftung und eines Synchronisation des Tagesgangs der Regelung erfolgt.

5. Verfahren nach Anspruch 4, **dadurch gekennzeichnet, dass** das Istwertsignal der Luftqualität gefiltert und das gefilterte Signal daraufhin untersucht wird, ob es innerhalb eines bestimmten Zeituntervalls ein Signalmaximum aufweist, und dass das Auftreten eines solchen Maximums als Wert maximaler Luftqualität interpretiert wird.

6. Verfahren nach Anspruch 5, **dadurch gekennzeichnet, dass** die Suche nach dem Signalmaximum des gefilterten Signals innerhalb eines Zeitfensters von etwa 22,5 bis 25,5 Stunden nach der letzten Referenzlüftung erfolgt, und dass bei Ausbleiben eines Signalmaximums am Ende dieses Zeitfensters eine Synchronisation des Tagesgangs und eine Referenzlüftung vorgenommen wird.

7. Regler zur Durchführung eines Verfahrens nach Anspruch 1, mit einem Sensor (3), einer Sensorelektronik und einer Regelelektronik (2), **dadurch gekennzeichnet, dass** die Regelelektronik (2) einen Mikrocontroller (13) enthält, welcher eine Steuerung (15) für eine Bedarfslüftung und für eine Referenzlüftungen aufweist, wobei der Regler derart ausgestaltet ist, dass die Referenzlüftung vorgenommen und dabei ein effektiver Sollwert der Luftqualität ermittelt wird, aus diesem in einem adaptiven Verfahren ein adaptiver Sollwert bestimmt und als Sollwert für die Regelung verwendet wird.

8. Regler nach Anspruch 7, **dadurch gekennzeichnet, dass** der Mikrocontroller (13) ein für bestimmte Frequenzen des Istwertsignals der Luftqualität durchlässiges Filter aufweist.

9. Regler nach Anspruch 7, **dadurch gekennzeichnet, dass** der Mikrocontroller (13) eine Logarithmierstufe (17) zur Logarithmierung der Sensorsignale enthält.

10. Regler nach Anspruch 8 oder 9, **dadurch gekennzeichnet, dass** der Mikrocontroller (13) einen Timer (16) enthält, der bei jeder Auslösung einer Referenzlüftung auf Null zurückgestellt wird und nach einer bestimmten Zeit ein Zeitfenster öffnet, innerhalb von welchem eine Untersuchung des Istwertsignals auf das Auftreten eines Werts maximaler Luftqualität erfolgt.

11. Regler nach einem der Ansprüche 7 bis 10, **dadurch gekennzeichnet, dass** der Sensor (3) für die Luftqualität zusammen mit der Sensorelektronik im Gehäuse des Reglers (1) eingebaut ist.

12. Regler nach Anspruch 11, **dadurch gekennzeichnet**, das ein Anschluss (12) für einen externen Sensor vorgesehen und dass wahlweise der externe oder der eingebaute Sensor (3) an den Mikrocontroller (13) angeschlossen ist.

13. Regler nach Anspruch 12, **dadurch gekennzeichnet, dass** bei Anschluss des externen Sensors an den Mikrocontroller (13) der eingebaute Sensor (3) deaktiviert ist.

14. Regler nach Anspruch 13, **dadurch gekennzeichnet, dass** sowohl der externe als auch der eingebaute Sensor (3) durch einen Mischgasfühler gebildet ist.

## Claims

1. Method for sensor-controlled demand ventilation of a space, in which the air quality is monitored by a sensor, the sensor signal compared to a reference value, and when the air refreshment demand is changed, a switching signal is triggered and the amount of outside air supplied is adjusted correspondingly, **characterised in that** at intervals a reference ventilation is undertaken and thereby an effective reference value of the air quality sensed, and that from this, in an adaptive method, an adaptive reference value is determined and is used as the reference value for control.

2. Method according to claim 1, **characterised in that** the determination of the adaptive reference value is done in a step-wise manner, in that the current effective reference value is compared to the directly preceding adaptive reference value, and when there is a difference between these two reference values, adaptation of the current effective reference value is undertaken, with a selectable step size.

3. Method according to claim 2, **characterised in that** reference ventilation is generally undertaken daily and is preferably done at the time of day with the external air quality relevant for obtaining the control target.

4. Method according to claim 3, **characterised in that** for the purpose of triggering reference ventilation, the actual value signal of the air quality is periodically examined for periodically repeating maximum air quality values, and in that when such a maximum occurs, reference ventilation and synchronisation of the daily pattern of the controller takes place.

5. Method according to claim 4, **characterised in that** the actual value signal of the air quality is filtered, and the filtered signal is tested as to whether it shows a signal maximum within a certain time interval, and in that the occurrence of such a maximum is interpreted as a maximum air quality value.

6. Method according to claim 5, **characterised in that** the search for the signal maximum of the filtered signal takes place within a time window of approximately 22.5 to 25.5 hours after the preceding reference ventilation, and in that in the absence of a signal maximum at the end of this time window, synchronisation of the daily pattern and reference ventilation is undertaken.

7. Controller for implementing a method according to claim 1, with a sensor (3), sensor electronics, and control electronics (2), **characterised in that** the control electronics (2) include a micro-controller (13) which is provided with a control means (15) for demand ventilation and for reference ventilation, wherein the controller is configured such that reference ventilation is undertaken and thereby an effective reference value of the air quality is obtained, and from this, in an adaptive method, an adaptive reference value is determined and is used as the reference value for control.

8. Controller according to claim 7, **characterised in that** the micro-controller (13) is provided with a filter passable for certain frequencies of the actual value signal of the air quality.

9. Controller according to claim 7, **characterised in that** the micro-controller (13) includes a logarithmation stage (17) for applying a logarithm to the sensor signals.

10. Controller according to claim 8 or 9, **characterised in that** the micro-controller (13) includes a timer (16) which is returned to zero each time reference ventilation is triggered, and after a certain time opens a time window within which an examination of the actual value signal for the occurrence of a maximum air quality value takes place.

11. Controller according to one of claims 7 to 10, **characterised in that** the sensor (3) for the air quality is built-in, together with the sensor electronics, in the housing for the controller (1).

12. Controller according to claim 11, **characterised in that** a connector (12) for an external sensor is provided, and that the external or the built-in sensor (3) is selectively connected to the micro-controller (13).

13. Controller according to claim 12, **characterised in that** when the external sensor is connected to the micro-controller (13), the built-in sensor (3) is de-activated.

14. Controller according to claim 13, **characterised in that** both the external and the built-in sensors (3) are formed by a mixed gas sensor.

## Revendications

1. Procédé de ventilation d'une pièce sur demande, commandée par capteur, dans lequel la qualité de l'air est surveillée par un capteur, le signal du capteur est comparé à une valeur prescrite et, en cas de modification de la demande de renouvellement de l'air, un signal de commutation est déclenché et la quantité d'air extérieur amenée est adaptée en conséquence, **caractérisé par** le fait qu'à certains intervalles il est procédé à une ventilation de référence et une valeur prescrite effective de la qualité de l'air y est déterminée et qu'à partir de cette valeur prescrite effective, une valeur prescrite adaptative est déterminée dans un procédé adaptatif et employée comme valeur prescrite pour la régulation.

2. Procédé selon la revendication 1, **caractérisé par** le fait que la détermination de la valeur prescrite adaptative se fait pas à pas, en ce sens que la valeur prescrite effective actuelle est comparée à la valeur prescrite adaptative immédiatement précédente et, en cas d'écart entre ces deux valeurs prescrites, il est procédé à une adaptation de la valeur prescrite effective actuelle dans la mesure d'une grandeur que l'on peut choisir et qui intervient pas à pas.

3. Procédé selon la revendication 2, **caractérisé par** le fait qu'il est généralement procédé journellement à la ventilation de référence qui se fait de préférence à l'heure où la qualité de l'air extérieur convient pour atteindre le but de la régulation.

4. Procédé selon la revendication 3, **caractérisé par** le fait que, dans le but de déclencher la ventilation de référence, le signal de la valeur réelle de la qualité de l'air est étudié au point de vue valeurs revenant périodiquement de la qualité maximale de l'air et que lors de la survenance d'une telle valeur maximale il se fait une ventilation de référence et une synchronisation de la marche journalière de la régulation.

5. Procédé selon la revendication 4, **caractérisé par** le fait que le signal de la valeur réelle de la qualité de l'air est filtré et que le signal filtré est étudié pour savoir si, à l'intérieur d'un intervalle de temps déterminé, se présente un maximum du signal et que la survenance d'un tel maximum est interprétée comme valeur de la qualité maximale de l'air.

6. Procédé selon la revendication 5, **caractérisé par** le fait que la recherche du maximum du signal filtré se fait à l'intérieur d'une fenêtre temporelle valant environ 22,5 à 25,5 heures après la dernière ventilation de référence et qu'en cas d'absence d'un maximum du signal il est procédé à la fin de cette fenêtre temporelle à une synchronisation de la marche journalière et à une ventilation de référence.

7. Régulateur pour la mise en oeuvre d'un procédé selon la revendication 1, comportant un capteur (3), un circuit électronique de capteur et un circuit électronique de régulateur (2), **caractérisé par** le fait que le circuit électronique de régulateur (2) contient un microcontrôleur (13) qui présente un circuit de commande (15) pour une ventilation sur demande et pour des ventilations de référence, le régulateur étant réalisé de façon qu'il soit procédé à la ventilation de référence et qu'y soit déterminée une valeur prescrite effective de la qualité de l'air à partir de laquelle est déterminée, dans un procédé adaptatif, une valeur prescrite adaptative employée comme valeur prescrite pour la régulation.

8. Régulateur selon la revendication 7, **caractérisé par** le fait que le microcontrôleur (13) présente un filtre perméable pour des fréquences déterminées du signal de la valeur prescrite de la qualité de l'air.

9. Régulateur selon la revendication 7, **caractérisé par** le fait que le microcontrôleur (13) contient un étage de calcul logarithmique (17) pour le calcul logarithmique des signaux du capteur.

10. Régulateur selon la revendication 8 ou 9, **caractérisé par** le fait que le microcontrôleur (13) contient un programmateur (16) qui, à chaque déclenchement d'une ventilation de référence, est réinitialisé à la valeur zéro et, après un temps déterminé, ouvre une fenêtre temporelle à l'intérieur de laquelle se fait une étude du signal de la valeur réelle au point de vue survenance d'une valeur de la qualité maximale de l'air.

11. Régulateur selon l'une des revendications 7 à 10, **caractérisé par** le fait que le capteur (3) pour la qualité de l'air ainsi que le circuit électronique du capteur sont intégrés dans le carter du régulateur (1).

12. Régulateur selon la revendication 11, **caractérisé par** le fait qu'est prévu un raccord (12) pour un capteur extérieur et qu'au choix c'est le capteur extérieur ou le capteur intégré (3) qui est relié au microcontrôleur (13).

13. Régulateur selon la revendication 12, **caractérisé par** le fait que lors du raccordement du capteur extérieur au microcontrôleur (13), le capteur intégré (3) est désactivé.

14. Régulateur selon la revendication 13, **caractérisé par** le fait qu'aussi bien le capteur extérieur que le capteur intégré (3) sont formés par un détecteur de mélange de gaz.
